**Europäisches Patentamt**

**European Patent Office**

**Office européen des brevets**

(19)

(11) Veröffentlichungsnummer : **0 098 340**
**B1**

(12) **EUROPÄISCHE PATENTSCHRIFT**

(45) Veröffentlichungstag der Patentschrift :
30.10.85

(21) Anmeldenummer : 83100024.5

(22) Anmeldetag : 04.01.83

(51) Int. Cl.⁴ : **B 65 G 53/48, F 04 D 3/02,**
**F 16 K 1/20**

(54) Schneckenpumpe mit an beiden Enden gelagerter Schnecke.

(30) Priorität : 02.07.82 DE 3224710

(43) Veröffentlichungstag der Anmeldung :
18.01.84 Patentblatt 84/03

(45) Bekanntmachung des Hinweises auf die Patenterteilung : 30.10.85 Patentblatt 85/44

(84) Benannte Vertragsstaaten :
DE FR GB IT

(56) Entgegenhaltungen :
DE-C- 593 486
DE-C- 848 320
FR-A- 1 324 051
FR-A- 2 110 816

(73) Patentinhaber : CLAUDIUS PETERS AKTIENGESELL-
SCHAFT
Kapstadtring 1
D-2000 Hamburg 60 (DE)

(72) Erfinder : Fischer, Alfred
Rotbergkamp 3
D-2100 Hamburg 90 (DE)
Erfinder : Freimuth, Claus
Alter Achterkamp 74 c
D-2070 Gross Hansdorf (DE)
Erfinder : Gerlach, Roland
Farmsener Höhe 6
D-2000 Hamburg 72 (DE)
Erfinder : Siefert, Gerhard
Langenhege 34
D-2057 Reinbek (DE)

(74) Vertreter : Glawe, Delfs, Moll & Partner Patentanwälte
Postfach 26 01 62 Liebherrstrasse 20
D-8000 München 26 (DE)

## Beschreibung

Die Erfindung betrifft eine Schneckenpumpe mit an beiden Enden gelagerter Schnecke zum Fördern von festem staubförmigem und feinkörnigem Material mit einem Einlaß für das zu fördernde Material und einem Auslaß für die Materialabgabe in einen Raum, der unter höherem Gasdruck als der Einlaß steht, wobei der Auslaß mit einem Rückschlagventil mit einem schwenkbaren Verschlußelement versehen ist und im Bereich zwischen den beiden Lagerungen der Schnecke vorgesehen ist.

Mit Schneckenpumpen dieser Art wird pneumatisch förderbares Schüttgut aus einem Aufgabebehälter in eine Förderleitung eingeschleust, in der ein höherer Gasdruck herrscht als an der Aufgabestelle. Damit das Gas aus der Förderleitung nicht durch die Schneckenpumpe an die Aufgabestelle gelangen kann und dort entweichen kann, ist ein Rückschlagventil vorgesehen. Erst wenn sich bei Betrieb der Schneckenpumpe ein entsprechender Druck von durch die Schneckenpumpe gefördertem Material aufgebaut hat, wird das Rückschlagventil geöffnet. Da dann der Raum in Förderrichtung gesehen vor dem Rückschlagventil mit Material gefüllt ist, kann das Gas nicht in Rückwärtsrichtung entweichen.

Das Rückschlagventil kann eine einfache Klappe mit entsprechender Befestigung mit einem schwenkbaren Hebel sein, wenn die Schnecke nur an ihrem vorderen Ende, das heißt in der Nähe der Aufgabestelle gelagert ist (DE-AS 2 507 687). Der Nachteil einer solchen Schneckenpumpe besteht jedoch darin, daß insbesondere bei höheren Rotationsgeschwindigkeiten das freie Ende der Schnecke in Vibrationen versetzt werden kann, die nur schwer und mit hohem technischen Aufwand zu beherrschen sind. Einfacher und zuverlässiger ist auf jeden Fall eine Lagerung der Schnecke an ihren beiden Enden.

Dabei tritt dann aber natürlich das Problem auf, daß ein einfaches Rückschlagventil am Auslaßende der Schnecke nicht mehr angeordnet werden kann. Man hat daher dieses Auslaßventil seitlich neben der Schnecke angeordnet (DE-AS 2 751 773). Dabei tritt jedoch folgender Nachteil auf. Das zu fördernde Material wird in der Nähe des Rückschlagventils verdichtet. Diese Verdichtung ist sogar erwünscht, um die bereits erwähnte Abdichtung gegen rückströmendes Gas zu erreichen. Muß nun dieses verdichtete Material noch seitlich, unter Umständen um 90° umgelenkt werden, so wird hierfür zusätzliche Energie notwendig. Außerdem tritt eine erhöhte Lagerbelastung und sehr großer Verschleiß auf. Diese Nachteile können zwar durch einen vergrößerten Wellendurchmesser mit aufgesetzten Rippen im Auslaufbereich vermindert werden. Dabei verbaut man sich aber die Möglichkeit, die sich besonders stark abnutzenden Endbereiche der Schneckenwendel austauschbar anzuordnen.

Es besteht an sich auch die Möglichkeit, die hintere Lagerung der Schnecke im Materialstrom anzuordnen (EP-OS 00 41 279). Das Schneckengehäuse wird dafür etwas verlängert, das hintere Lager wird auf Stützen angeordnet, zwischen denen das Material hindurchströmt, und das Rückschlagventil ist hinter dieser Lagerung vorgesehen. Dabei treten jedoch Probleme insofern auf, als nicht verhindert werden kann, daß das unter Umständen sehr feinkörnige Material in das hintere Lager eindringt und dieses allmählich zerstört.

Schließlich hat man noch versucht, das Rückschlagventil aus zwei Elementen herzustellen, die in der Nähe der Auslaßöffnung die Schneckenwelle umgreifen (FR-PS 2 110 816). Hier wird aber keine gute Dichtung erreicht, da mehrere Spalte zwischen den einzelnen Verschlußelementen offenbleiben. Macht man die Spalte zwischen den einzelnen Klappenelementen dagegen klein, so besteht die Gefahr, daß sich diese Elemente untereinander verklemmen. Auch treten zwangsläufig an den zusätzlichen Kanten der Klappen Wirbel auf, die zu erhöhtem Verschleiß führen, da sich der von der Schnecke geförderte Schüttgutpfropfen wenigstens teilweise mit der Schnecke zusammen dreht.

Die Aufgabe der Erfindung besteht darin, ein einfaches, zuverlässiges und wirksames Rückschlagventil für eine Schneckenpumpe der eingangs genannten Art zu schaffen.

Die erfindungsgemäße Lösung besteht darin, daß das schwenkbare Verschlußelement ein ringförmiges Element ist, das die Schneckenwelle umgreift, daß die Schneckenwelle in Förderrichtung gesehen wenigstens unmittelbar vor dem Ort des ringförmigen Elements in dessen Schließstellung einen Bereich aufweist, in dem der Durchmesser der Schneckenwelle größer als der Innendurchmesser des ringförmigen Elements ist, der wiederum größer ist als der Durchmesser der Schneckenwelle hinter dem ringförmigen Element.

Dieses Rückschlagventil hat im wesentlichen den gleichen einfachen Aufbau wie das plattenförmige Rückschlagventil bei Schneckenpumpen mit einseitiger Wellenlagerung. Es ist jedoch ringförmig aufgebaut und umschließt die Welle. In der geschlossenen Stellung liegt das ringförmige Verschlußelement am Schneckengehäuse und an der Schneckenwelle dichtend an, an der Schneckenwelle dabei an dem Bereich erhöhten Durchmessers, und zwar direkt oder mit einem Zwischenraum, d. h. mit Spiel. Da unmittelbar hinter diesem Bereich erhöhten Durchmessers die Schneckenwelle einen kleineren Durchmesser als der Innendurchmesser des ringförmigen Elementes hat, kann das ringförmige Element eine Schwenkbewegung wie ein normales plattenförmiges Rückschlagventil ausführen, ohne dabei die Schneckenwelle zu berühren.

Dabei kann durch Anschläge dafür gesorgt sein, daß sich das Rückschlagventil nicht soweit öffnet, daß das ringförmige Element die Schneckenwelle doch noch berührt.

Vorteilhafterweise wird man die Oberflächen am Bereich grösseren Durchmessers der Schneckenwelle und des ringförmigen Elements so ausbilden, daß sie mit zusammenwirkenden Dichtflächen versehen sind, um so wirksam zu verhindern, daß Luft und/oder gefördertes Material zwischen Bereich grösseren Durchmessers und ringförmigem Element in unerwünschter Weise hindurchtreten können. Das ringförmige Element kann dabei am Bereich größeren Durchmessers unmittelbar anliegen, wodurch eine besonders gute Abdichtung erhalten wird. Dabei tritt aber das Problem von Verschleiß auf, da sich die Schneckenwelle dreht und das ringförmige Element stillsteht. Vorteilhafterweise kann man daher, um den entsprechenden Verschleiß zu vermeiden, vorsehen, daß das ringförmige Element im geschlossenen Zustand am Bereich größeren Durchmessers mit Spiel anliegt. Als besonders vorteilhafte Werte für das Spiel, das heißt den Zwischenraum zwischen ringförmigem Element und der Oberfläche des Bereiches größeren Durchmessers im geschlossenen Zustand haben sich Werte von ungefähr 0,2 bis 0,5 mm erwiesen.

Wenn die Schwenkachse des ringförmigen Elements in Axialrichtung der Schneckenwelle im Bereich hinter dem ringförmigen Element, wenn sich dieses in der Schließstellung befindet, angeordnet ist, wird ein größerer möglicher Schwenkbereich des ringförmigen Elementes erreicht. Besonders groß ist dieser Schwenkbereich, wenn die Schwenkachse des ringförmigen Elements in der Axialrichtung in dem Bereich angeordnet ist, innerhalb dem sich das ringförmige Element bewegt.

Erhöht sich der Durchmesser der Schneckenwelle vor dem Bereich erhöhten Durchmessers in Vorwärtsrichtung allmählich, so wird hier beim Pumpbetrieb das Material gestaut und verdichtet, um besser einen das Strömen von Luft in Rückwärtsrichtung verhindernden Materialpfropfen aufzubauen, aufgrund dessen möglicherweise beim Betrieb teilweise das Rückschlagventil gar nicht mehr erforderlich ist.

Eine besonders einfache Konstruktion bestünde darin, daß die Schneckenwelle vor dem ringförmigen Element, wenn sich dieses in der Schließstellung befindet, einen größeren Durchmesser hat als hinter dem ringförmigen Element, an der Ventilstelle also eine Stufe hat. Es kann jedoch auch lediglich ein Bereich mit lokal erhöhtem Durchmesser der Schneckenwelle vorgesehen sein. Dieser Bereich kann zum Beispiel an einer abnehmbaren Hülse für die Schneckenwelle vorgesehen sein. Da zwischen ringförmigem Verschlußelement und der Dichtfläche des Bereiches erhöhten Durchmessers Reibung auftritt, ist Verschleiß unvermeidlich und zwar wegen des dort hindurchtretenden Materials selbst dann, wenn sich diese Teile nicht berühren. Ist dieser Bereich an der abnehmbaren Hülse vorgesehen, so können Verschleißteile leicht ausgewechselt werden. Die Hülse kann sich dabei in Vorwärtsrichtung durch den ganzen Auslaßraum erstrecken, so daß auch die im Auslaßraum auftretende Erosion durch das geförderte Material nur eine Hülse abnutzt, die dann leicht ausgewechselt werden kann.

Eine weitere Verbesserung besteht darin, daß auch die Schneckenwendel und auf der Schneckenwelle angeordnete Dichtungen und Lager auf abnehmbaren Hülsen für die Schneckenwelle angeordnet sind, wobei alle Hülsen auf der Schneckenwelle in Axialrichtung verschiebbar und von derselben abziehbar sind. Man erhält auf diese Weise die Möglichkeit, auch andere Verschleißteile leicht auszuwechseln, was z. B. im Bereich der Dichtungen wichtig sein kann, da dort ebenfalls starker Verschleiß auftreten kann. Selbstverständlich müssen die Hülsen drehfest auf der Schneckenwelle angeordnet sein. Sie können durch entsprechende Klauen, Nuten und Federn oder dergleichen auf der Drehwelle untereinander drehfest verbunden sein.

Ein weiterer Vorteil dieser Konstruktion besteht darin, daß alle Hülsen relativ zur Schneckenwelle verschoben werden können. Ist z. B. eine Lagerhülse durch entsprechend ausgebildete Lager in Axialrichtung festgehalten, so können die übrigen Hülsen und mit diesen auch die Schneckenwelle in Axialrichtung verschoben werden, wodurch das Spiel zwischen Bereich erhöhten Durchmessers und ringförmigem Element besonders gut, genau und einfach eingestellt und nachjustiert werden kann.

Es ist an sich wünschenswert, da sich die hinteren Endbereiche der Schneckenwendel besonders stark abnutzen, diese aus besonders abnutzungsfestem Material herzustellen und austauschbar zu machen. Bei zweiseitig gelagerten Schneckenwellen ist dies jedoch schwierig zu bewirken. Diese Probleme können · jedoch ebenfalls bei der erfindungsgemäßen Vorrichtung gelöst werden, wenn eine abnehmbare Hülse oder mehrere derselben vorgesehen sind, wodurch dann die hinteren Endbereiche über einen Bereich geringeren Durchmessers der Welle abgezogen werden können. Diese Ausführungsform bietet sich besonders dann an, wenn auch noch weitere Hülsen für Dichtungen, Lager usw. vorgesehen sind. Sind dagegen nicht durchgehende, einander berührende Hülsen vorgesehen, so können die Befestigungselemente für die Endbereiche der Schneckenwendel so ausgebildet werden, daß sie im zusammengebauten Zustand durch die Hülse des Bereichs erhöhten Durchmessers überdeckt werden.

Die Erfindung wird im folgenden beispielsweise anhand von vorteilhaften Ausführungsformen unter Bezugnahme auf die beigefügten Zeichnungen beschrieben. Es zeigen :

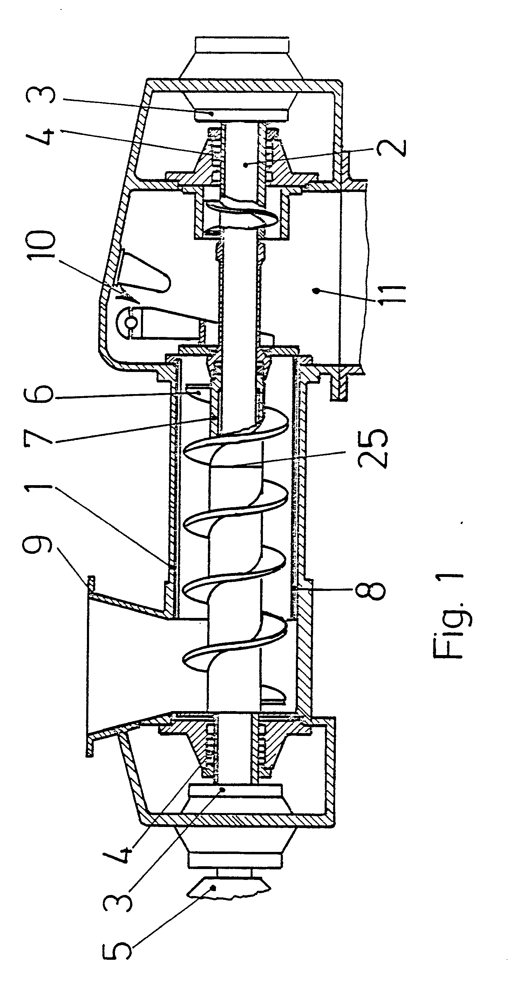

Figur 1 im schematischen Querschnitt eine Ausführungsform der erfindungsgemäßen Schneckenpumpe ;

Figur 2 im vergrößerten Maßstab den Bereich des Auslasses der Pumpe mit dem erfindungsgemäßen Rückschlagventil ; und

Figur 3 im schematischen Querschnitt eine Einzelheit einer anderen Ausführungsform der Erfindung.

In einem Gehäuse 1 der Schneckenpumpe ist eine Welle 2 angeordnet, die an ihrem in Strömungsrichtung vorderen und hinteren Ende mit Lagern versehen ist, die schematisch bei 3 angedeutet sind. Außerdem können noch Dichtungen vorgesehen sein, die mit 4 bezeichnet sind und verhindern sollen, daß zu förderndes Material in die Lager eintritt und dieselben beschädigt. Die Schneckenwelle kann dabei an ihrem vorderen Ende mit einem Antrieb 5 versehen sein. Bei der gezeigten Ausführungsform ist die Schneckenwendel 6 im Endbereich nicht direkt auf der Schneckenwelle 2 angebracht, sondern auf einer Hülse 7. Die eigentliche Pumpkammer wird nicht durch die Gehäusewandung 1 begrenzt, sondern durch eine weitere Hülse 8, die allerdings bezüglich der Erfindung von untergeordneter Bedeutung ist. Oberhalb der Schnecke ist eine Öffnung 9 zum Eingeben des zu fördernden Materials vorgesehen. Dieses Material wird durch die Schnecke in den Figuren nach rechts gefördert und dringt dann, wobei sich das Rückschlagventil 10 öffnet, in den Auslaßraum 11 ein, aus dem es dann in die pneumatische Förderleitung oder andere Einrichtung gelangt, die unter erhöhtem Gasdruck steht.

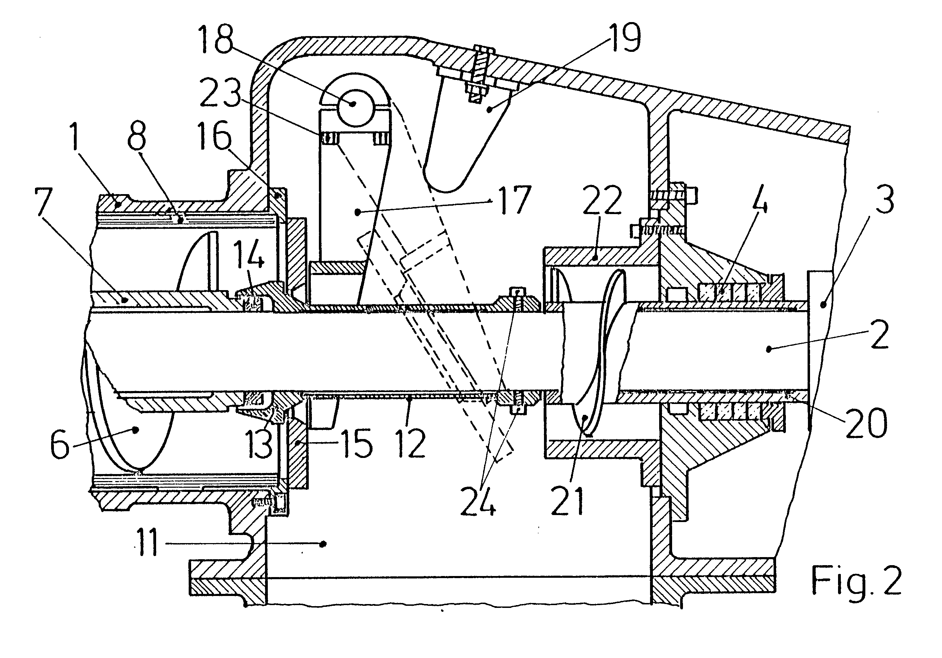

In Fig. 2 ist die Auslaßseite der Schneckenpumpe mit dem erfindungsgemäßen Rückschlagventil deutlicher gezeigt.

Auf der Welle 2 ist im Bereich des Auslaßraumes 11 mit Hilfe von Schrauben 24 eine Hülse 12 lösbar befestigt, die an ihrem vorderen Ende einen Bereich 13 erhöhten Durchmessers aufweist. Dieser Bereich 13 verjüngt sich in Rückwärtsrichtung allmählich, so daß wie beschrieben das geförderte Material beim Pumpbetrieb hier verdichtet wird. Außerdem übergreift dieser Bereich 13 höheren Durchmessers Befestigungseinrichtungen für die Hülse 7 und die lösbaren Bereiche der Schneckenwendel 6. Diese Befestigungseinrichtungen sind bei 14 schematisch dargestellt. Im Falle, daß Hülse 7 und Schneckenwendel 6 geteilt sind (wie bei 25 angedeutet), können diese Befestigungseinrichtungen zum Festhalten des hinteren Teils der Hülse 7 ausgebildet sein. An der hinteren Seite weist der Bereich 13 eine ebene Fläche auf, an der ein ringförmiges Element 15 dichtend anliegen kann. Es kann dafür direkt den Bereich 13 berühren oder mit Spiel anliegen, d. h. etwa 0,2 bis 0,5 mm Abstand aufweisen, wodurch der Verschleiß verringert wird. Das ringförmige Element 15 liegt am Umfang der Schneckenkammer am Gehäuse 1 und/oder der äußeren Hülse 8 (in der Fig. über einen Ring 16) an und verschließt dadurch das Auslaßende der Pumpe. Das ringförmige Element 15 hat einen Innendurchmesser, der größer ist als der Außendurchmesser der Hülse 12 in dem Bereich, der hinter dem Bereich 13 höheren Durchmessers angeordnet ist. Es ist an einem Hebel 17 befestigt, der an einer Schwenkachse 18 lösbar befestigt ist. Die Geometrie ist dabei so gewählt, daß sich das ringförmige Element 15 mit dem Schwenkhebel 17 zwischen der mit ausgezogenen Linien gezeichneten geschlossenen Stellung und der mit gestrichelten Linien ganz geöffneten Stellung bewegen kann. Zur Begrenzung der Öffnungsbewegung kann dabei ein verstellbarer Anschlag 19 vorgesehen sein.

Die ganze Anordnung ist so getroffen, daß vom hinteren Ende der Welle 2 her die Hülse 12 entfernt werden kann, nachdem die Lager 3, eine hintere Hülse 20 mit einer an sich bekannten im umgekehrten Sinne wirkenden Schnecke 21 und eine diese Schnecke umgebende Hülse 22 demontiert sind. Die Schnecke 21 hat dabei bekanntlich den Zweck, einen Gegendruck an Material aufzubauen, damit nicht durch die Schnecke unter Druck gefördertes Material in das hintere Lager 3 eindringt. Nachdem die Hülse 12 entfernt ist und auch der mit Schrauben 23 an der Achse 18 befestigte Hebel 17 mit dem ringförmigen Element 15 entfernt ist, können dann auch die Endbereiche der Schneckenwendel ausgewechselt werden.

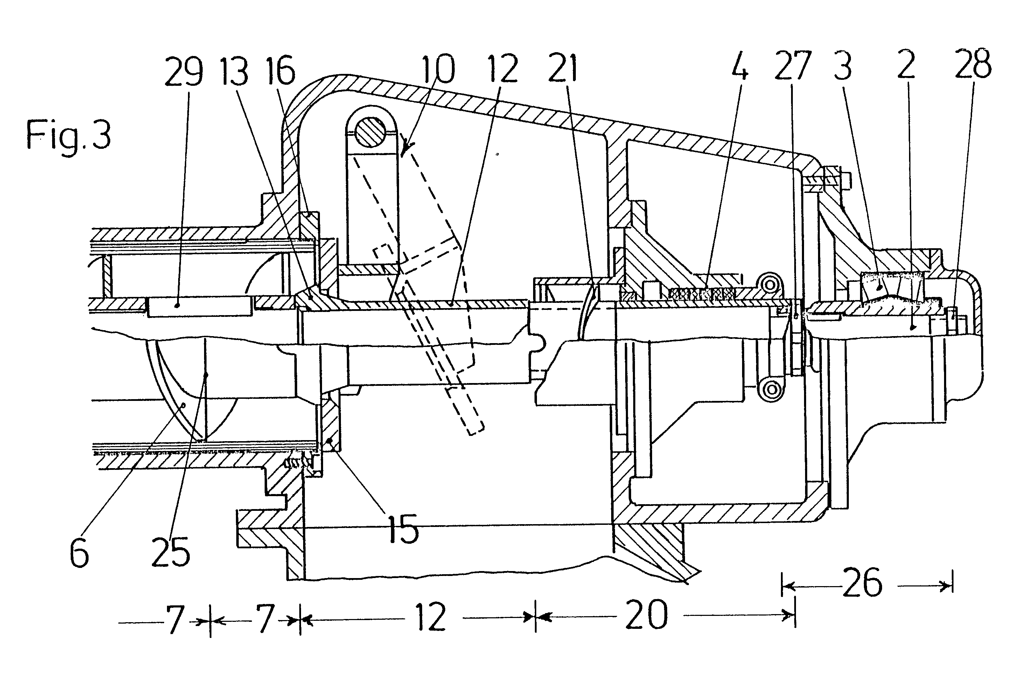

In Fig. 3 ist eine besonders vorteilhafte Ausführungsform dargestellt, bei der eine größere Anzahl von Hülsen auf der Schneckenwelle 2 angeordnet ist. Insbesondere sind von links nach rechts zunächst zwei bei 25 getrennte Hülsen 7 für die Schneckenwendel 6 vorgesehen. Die linke Hülse 7 wird dabei durch einen ringwulst, einen Ring oder dergleichen, der auf der Schneckenwelle am linken Ende der Hülse 7 vorgesehen ist, daran gehindert, sich nach links über diesen ringförmigen Anschlag hinaus zu bewegen.

An die rechte Hülse 7 grenzt unmittelbar die Hülse 12 an, die den Bereich erhöhten Durchmessers 13 trägt. An diese Hülse 12 schließt sich dann rechts die Hülse 20 an, die die im umgekehrten Sinne wirkende Schnecke 21 und die Dichtung 4 trägt.

Alle diese Hülsen berühren sich direkt, sind auf der Welle in Axialrichtung verschiebbar und gegen Verdrehung untereinander und gegen die Welle 2 gesichert, wie dies z. B. bei 29 angedeutet ist.

Die Hülse 20 überlappt an ihrem in Fig. 3 rechten Ende mit einer Hülse 26, die mit dem Lager 3 so verbunden ist, daß die Hülse 26 in Axialrichtung festgehalten wird. Auf der Hülse 26 in Axialrichtung festgehalten wird. Auf der Hülse 26 ist eine Ringmutter 27 am linken Ende befestigt, durch die die Hülse 20 und damit die anderen Hülsen nach links verschoben werden können. Auf der Welle 2 ist eine Ringmutter 28 rechts von der Hülse 26 vorgesehen, durch die die Hülse 26 in bezug auf die Welle 2 nach links gedrückt werden kann bzw. genauer gesagt, da die Hülse 26 aufgrund der Konstruktion des Lagers 3 nicht verschoben werden kann, die Welle 2 nach rechts gezogen werden kann.

Da die Bewegung der Hülsen 7, 12, 20 nach links durch einen ringförmigen Anschlag in bezug auf die Welle begrenzt ist, können durch entsprechendes Anziehen der Muttern 27, 28 die Hülsen 7, 12, 20 nach rechts oder links verstellt werden. Dadurch kann das Spiel des Rückschlagventils, das heißt das Spiel zwischen den Dichtflächen des Bereiches 13 erhöhten Durchmessers und des ringförmigen Elementes 15 sehr genau und einfach eingestellt werden. Außerdem können alle Hülsen leicht von der Welle abgezogen werden, so daß Verschleißteile leicht ausgewechselt werden können.

### Patentansprüche

1. Schneckenpumpe mit an beiden Enden gelagerter Schnecke (6) zum Fördern von festem staubförmigem und feinkörnigem Material mit einem Einlaß (9) für das zu fördernde Material und einem Auslaß für die Materialabgabe in einem Raum (11), der unter höherem Gasdruck als der Einlaß steht, wobei der Auslaß mit einem Rückschlagventil (10) mit einem schwenkbaren Verschlußelement (15, 17) versehen ist und im Bereich zwischen den beiden Lagerungen (3) der Schnecke vorgesehen ist, dadurch gekennzeichnet, daß das schwenkbare Verschlußelement ein ringförmiges Element (15) ist, das die Schneckenwelle umgreift, daß die Schneckenwelle (2) in Förderrichtung gesehen wenigstens unmittelbar vor dem Ort des ringförmigen Elements (15) in dessen Schließstellung einen Bereich (13) aufweist, in dem der Durchmesser der Schneckenwelle (2) größer als der Innendurchmesser des ringförmigen Elements (15) ist, der wiederum größer ist als der Durchmesser der Schneckenwelle (2) hinter dem ringförmigen Element.

2. Schneckenpumpe nach Anspruch 1, dadurch gekennzeichnet, daß der Bereich (13) größeren Durchmessers und das ringförmige Element (15) mit zusammenwirkenden Dichtflächen versehen sind.

3. Schneckenpumpe nach Anspruch 1 oder 2, dadurch gekennzeichnet, daß das ringförmige Element (15) im geschlossenen Zustand am Bereich (13) größeren Durchmessers mit Spiel anliegt.

4. Schneckenpumpe nach Anspruch 3, dadurch gekennzeichnet, daß das Spiel ungefähr 0,2 bis 0,5 mm beträgt.

5. Schneckenpumpe nach einem der Ansprüche 1 bis 4, dadurch gekennzeichnet, daß die Schwenkachse (18) des ringförmigen Elements (15) in Axialrichtung der Schneckenwelle (2) im Bereich hinter dem ringförmigen Element (15), wenn sich dieses in der Schließstellung befindet, angeordnet ist.

6. Schneckenpumpe nach Anspruch 5, dadurch gekennzeichnet, daß die Schwenkachse (18) des ringförmigen Elements (15) in Axialrichtung in dem Bereich angeordnet ist, innerhalb dem sich das ringförmige Element bewegt.

7. Schneckenpumpe nach einem der Ansprüche 1 bis 6, dadurch gekennzeichnet, daß sich der Durchmesser der Schneckenwelle (2) vor dem Bereich (13) erhöhten Durchmessers in Vorwärtsrichtung allmählich erhöht.

8. Schneckenpumpe nach einem der Ansprüche 1 bis 7, dadurch gekennzeichnet, daß der Bereich (13) erhöhten Durchmessers der Schneckenwelle (2) an einer abnehmbaren Hülse (12) für die Schneckenwelle vorgesehen ist.

9. Schneckenpumpe nach Anspruch 8, dadurch gekennzeichnet, daß sich die Hülse (12) in Axialrichtung der Schneckenwelle durch den ganzen Auslaßraum (11) erstreckt.

10. Schneckenpumpe nach Anspruch 8 oder 9, dadurch gekennzeichnet, daß auch die Schneckenwendel (6) und auf der Schneckenwelle (2) angeordnete Dichtungen (4) und Lager (3) auf abnehmbaren Hülsen (7, 20, 26) für die Schneckenwelle angeordnet sind, wobei alle Hülsen (7, 12, 20, 26) auf der Schneckenwelle in Axialrichtung verschiebbar und von derselben abziehbar sind.

11. Schneckenpumpe nach einem der Ansprüche 1 bis 10, dadurch gekennzeichnet, daß die hinteren Endbereiche der Schneckenwendel (6) austauschbar sind.

### Claims

1. A screw pump provided with a screw (6), which is supported at both ends, and intended for conveying solid dust-like and fine-grained material and having an inlet (9) for the material to be conveyed and an outlet for the delivery of the material into a chamber (11) which is subjected to a higher gas pressure than the inlet, the outlet being provided with a non-return valve (10) with a pivotable closing element (15, 17) and being envisaged in the zone between the two supports (3) of the screw, characterised in that the pivotable closing element is a ring-shaped element (15) which embraces the screw shaft, and in that, viewed in the transport direction, the screw shaft (2) has, at least directly upstream of the location of the ring-shaped element (15), in the closing position thereof, a zone (13) in which the diameter of the screw shaft (2) is larger than the inside diameter of the ring-shaped element (15), which diameter, in turn, is larger than the diameter of the screw shaft (2) downstream of the ring- shaped element.

2. A screw pump as claimed in Claim 1, characterised in that the zone (13) having a larger diameter and the ring-shaped element (15) are provided with co-operating sealing surfaces.

3. A screw pump as claimed in Claim 1 or 2, characterised in that, in its closed state, the ring- shaped element (15) bears with a clearance against the zone (13) having the larger diameter.

4. A screw pump as claimed in Claim 3, characterised in that the clearance is approximately 0.2 to 0.5 mm.

5. A screw pump as claimed in one of Claims 1 to 4, characterised in that the pivot (18) of the ring-shaped element (15) is arranged, in the axial direction of the screw shaft (2), in the zone downstream of the ring-shaped element (15) when this element is in the closing position.

6. A screw pump as claimed in Claim 5, characterised in that the pivot (18) of the ring-shaped element (15) is arranged in the axial direction in that zone within which the ring-shaped element moves.

7. A screw pump as claimed in one of Claims 1 to 6, characterised in that the diameter of the screw shaft (2) gradually increases in the forward direction upstream of the zone (13) having an increased diameter.

8. A screw pump as claimed in one of Claims 1 to 7, characterised in that the zone (13) having an increased diameter on the screw shaft (2) is provided on a removable sleeve (12) for the screw shaft.

9. A screw pump as claimed in Claim 8, characterised in that the sleeve (12) extends in the axial direction of the screw shaft through the entire outlet chamber (11).

10. A screw pump as claimed in Claim 8 or 9, characterised in that the screw spiral (6) and seals (4), which are provided on the screw shaft (2), and bearings (3) are arranged on removable sleeves (7, 20, 26) for the screw shaft, all the sleeves (7, 12, 20, 26) being displaceable on the screw shaft in the axial direction and withdrawable therefrom.

11. A screw pump as claimed in one of Claims 1 to 10, characterised in that the rear end zones of the screw spiral (6) are exchangeable.

**Revendications**

1. Pompe à vis sans fin, comportant une vis sans fin (6) montée à rotation par ses deux extrémités, pour le transport de matières solides pulvérulentes ou à grains fins, avec une admission (9) pour la matière à transporter et une sortie par laquelle la matière parvient dans une chambre (11) qui est sous une pression de gaz plus élevée que l'admission, la sortie étant équipée d'un clapet antiretour (10) comportant un élément obturateur pivotant (15, 17) et étant disposée entre les deux paliers (3) de la vis sans fin, caractérisée en ce que l'élément obturateur pivotant est un élément annulaire (15) qui entoure l'arbre de la vis sans fin, en ce que l'arbre (2) de la vis sans fin présente, au moins immédiatement en amont de la position occupée par l'élément annulaire (15) dans sa position de fermeture, en considérant le sens du transport, une région (13) dans laquelle le diamètre de l'arbre de vis sans fin (2) est plus grand que le diamètre intérieur de l'élément annulaire (15), lequel est à son tour plus grand que le diamètre de l'arbre de vis sans fin (2) en aval de l'élément annulaire.

2. Pompe à vis sans fin selon la revendication 1, caractérisée en ce que la région (13) de plus grand diamètre et l'élément annulaire (15) sont munis de surfaces d'étanchéité qui coopèrent.

3. Pompe à vis sans fin selon la revendication 1 ou 2, caractérisée en ce que l'élément annulaire (15) en position fermée s'applique avec du jeu contre la région (13) de plus grand diamètre.

4. Pompe à vis sans fin selon la revendication 3, caractérisée en ce que le jeu est de l'ordre de 0,2 à 0,5 mm.

5. Pompe à vis sans fin selon l'une quelconque des revendications 1 à 4, caractérisée en ce que l'axe de pivotement (18) de l'élément annulaire (15) est située, dans la direction axiale de l'arbre de vis sans fin (2), dans la région située en aval de l'élément annulaire (15) lorsque celui-ci se trouve dans sa position de fermeture.

6. Pompe à vis sans fin selon la revendication 5, caractérisée en ce que l'axe de pivotement (18) de l'élément annulaire (15) est disposé, en direction axiale, dans la région à l'intérieur de laquelle se déplace l'élément annulaire.

7. Pompe à vis sans fin selon l'une quelconque des revendications 1 à 6, caractérisée en ce que le diamètre de l'arbre de vis sans fin (2) augmente peu à peu vers l'avant, en amont de la région (13) de diamètre augmenté.

8. Pompe à vis sans fin selon l'une quelconque des revendications 1 à 7, caractérisée en ce que la région (13) de diamètre augmenté de l'arbre de vis sans fin (2) est prévue sur un manchon amovible (12) pour l'arbre de vis sans fin.

9. Pompe à vis sans fin selon la revendication 8, caractérisée en ce que le manchon (12) s'étend, en direction axiale de l'arbre de vis sans fin, à travers toute la chambre de sortie (11).

10. Pompe à vis sans fin selon la revendication 8 ou 9, caractérisée en ce que l'hélice (6) de vis sans fin, ainsi que les garnitures d'étanchéité (4) et les roulements (3) disposés sur l'arbre de vis sans fin (2) sont également montés sur des manchons amovibles (7, 20, 26) pour l'arbre de vis sans fin, tous les manchons (7, 12, 20, 26) pouvant coulisser en direction axiale sur l'arbre de vis sans fin et pouvant être retirés de celui-ci.

11. Pompe à vis sans fin selon l'une quelconque des revendications 1 à 10, caractérisée en ce que les parties terminales arrière de l'hélice de vis sans fin (6) sont remplaçables.

Fig. 1

0 098 340

Fig. 2

0 098 340

Fig.3

29 13 16    10 12 21    4 27 3 2 28

6  25  15

7 | 7 | 12 | 20 | 26

0 098 340